# EUROPEAN PATENT SPECIFICATION

(11) **EP 0 449 330 B1**
(45) Date of publication and mention of the grant of the patent: **16.07.1997**
(21) Application number: 91105172.0
(22) Date of filing: 02.04.1991
(51) Int. Cl.: G11B 23/087, G11B 25/06

(54) **Tape cassette loading system**
Bandkassettenladesystem
Système de chargement de cassette à bande.

(30) Priority: 30.03.1990 JP 86566/90; 12.10.1990 JP 273551/90; 12.10.1990 JP 273552/90
(43) Date of publication of application: 02.10.1991
(73) Proprietor: MATSUSHITA ELECTRIC INDUSTRIAL CO., LTD., Kadoma-shi, Osaka-fu, 571 (JP)
(72) Inventor: Nishimura, Akihiro, 2-32, Nishikonoike-cho, Osaka-fu (JP); Ichimura, Toru, 30-23, Miyukihigashimachi, Osaka-fu (JP); Uematsu, Shuji, Shinkofudai 3-chome, Osaka-fu (JP); Shiomi, Yoshinori, 626-12, Yamakita, Okayama-ken (JP); Iwano, Kenji, 32-4-204, Obara, Okayama-ken (JP)
(74) Representative: Eisenführ, Speiser & Partner

(56) References cited:
- EP-A- 133 822
- EP-A- 286 751
- EP-A- 334 257
- WO-A-89/04539
- US-A- 3 971 071
- US-A- 4 803 575
- PATENT ABSTRACTS OF JAPAN vol. 12, no. 276 (P-737)(3123) 30 July 1988

## Description

The invention relates to a tape cassette loading system with a set of tape cassettes from a small size cassette to a large size cassette, these cassettes to be inserted into a cassette holder with their long side, the system comprising a small tape cassette including a small cassette housing of generally a cuboid shape with a longitudinal length H and a depth J (J < H), and a pair of reels provided within said small cassette housing, said small cassette housing being formed with a first cassette guide groove normal to the longitudinal direction and at a central portion in a longitudinal direction on a bottom face of said small cassette housing for guiding it into the cassette holder; a large tape cassette including a large cassette housing also of generally cuboid shape with a longitudinal length S larger than said longitudinal length H and a depth T larger than said depth J of said small tape cassette and a pair of reels provided within said large cassette housing, said large cassette housing being formed with a first cassette guide groove normal to the longitudinal direction and at a central portion in a longitudinal direction on a bottom face of said large cassette housing for guiding it into the cassette holder; said cassette holder provided with a cassette erroneous insertion preventing projection formed at a central portion and corresponding to the first cassette guide grooves. Such a tape cassette loading system is known from EP-A-133 822.

The present invention relates particularly to a tape cassette system most suitable for use in a magnetic recording and reproducing apparatus such as a video tape recorder and the like or various kinds of other information processing apparatuses, etc.

Recently, there has been introduced into the market, a video tape recorder (referred to as VTR hereinafter) capable of loading tape cassettes of different sizes, but with the same format. Therefore, such VTR is complicated in the mechanism, and tends to give rise to various troubles when various tape cassettes of different sizes are to be loaded therein.

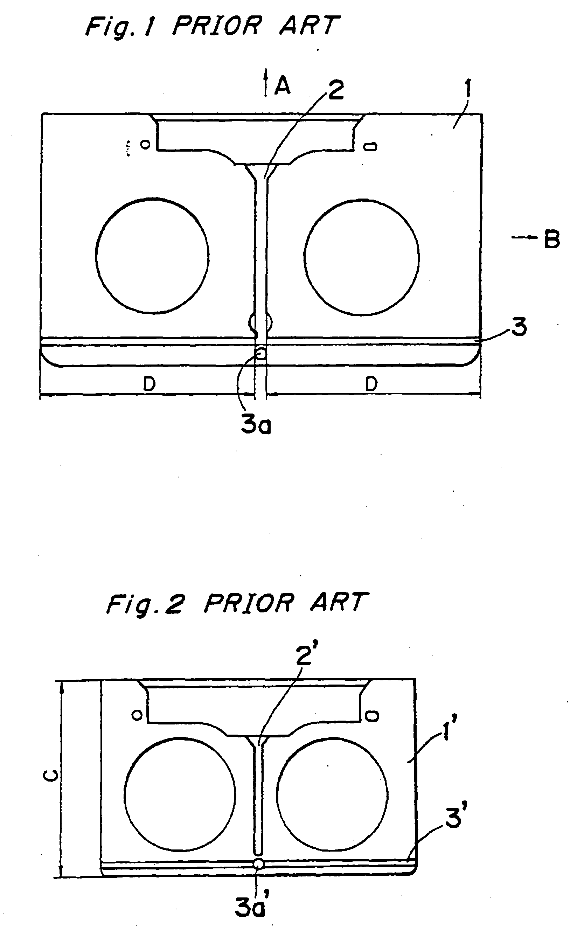

Hereinafter, a first example of conventional tape cassettes of different sizes for use in the VTR as referred to above will be explained with reference to Figs. 1 to 10.

As is well-known, each of such large and small tape cassettes has a cassette shell housing constituted by combining an upper half portion and a lower half portion, and a set of reels wound with a magnetic tape and accommodated within the cassette shell housing, with a cover member being provided at a front opening portion of the shell housing for protection of the stretched magnetic tape.

As shown in Fig. 1, on a bottom face of the large tape cassette 1, a first cassette guide groove 2 is formed at it central portion for guiding the tape cassette 1 to a predetermined position when said tape cassette is inserted into a cassette holder (not shown here) of the VTR in a direction indicated by an arrow A. Moreover, a second cassette guide groove 3 is also formed along a rear side edge of the tape cassette 1 for guiding the tape cassette 1 when it is inserted into the cassette holder in a direction indicated by an arrow B.

Numeral 3a represents a detection hole to be used when erroneous erasing of information recorded on the magnetic tape is to be prevented.

Fig. 2 shows the small tape cassette 1' in which like parts in the large tape cassette 1 in Fig. 1 are designated by like reference numerals with primes affixed thereto, and detailed description thereof is abbreviated for brevity of explanation.

It is to be noted here that, when a depth of the small tape cassette 1' is represented by C, and a distance between the first cassette guide groove 2 to each side face of the large tape cassette 1 is denoted by D, the relation is set at D>C.

It should be noted here that the detection holes 3a and 3a' are located at the same distance from the rear faces of the respective tape cassettes 1 and 1'.

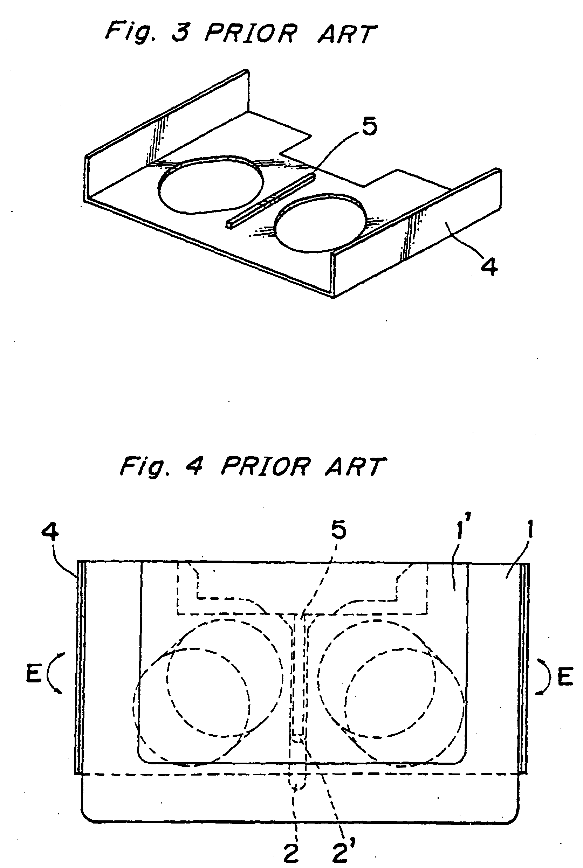

Incidentally, when the large or small tape cassette 1 or 1' is to be loaded into a VTR, said tape cassette is inserted into the tape holder 4 provided with a cassette guide protrusion 5 as shown in Fig. 3. During such insertion, the cassette guide protrusion 5 is received by the first guide groove 2 or 2' of the large or small tape cassette 1 or 1' so as to be restricted in a predetermined position.

By the provision of this first cassette guide groove 2 or 2' and the cassette guide protrusion 5, the tape cassette 1 or 1' may be prevented from erroneous insertion with respect to the upper or reverse face thereof.

However, in the arrangement as described above, since it is intended to positionally restrict the large or small tape cassette 1 or 1' by the one cassette guide protrusion 5 at the central portion as shown in Fig. 4, side play in directions indicated by arrows E is increased within the cassette holder 4 particularly in the large tape cassette 1, with a consequent unstability in the positional restriction, thus obstructing a smooth loading of the tape cassette into the VTR.

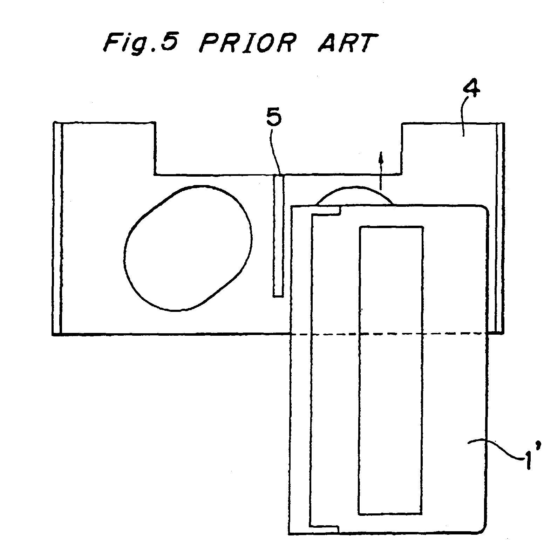

Additionally, since the distance between the cassette guide protrusion 5 of the cassette holder 4 and each side face of said cassette holder 4 is larger than the distance D referred to earlier, there has been such a serious problem that when the small tape cassette 1' is erroneously inserted longitudinally, it enters the interior of the VTR, thereby damaging internal mechanisms (Fig. 5).

Subsequently, large and small tape cassettes in which the unstability of positional restriction as explained in the above conventional first example has been prevented, will be explained.

It is to be noted here that, since the fundamental construction of the large and small tape cassettes are similar to those in the conventional first example, detailed description thereof is abbreviated for brevity of explanation.

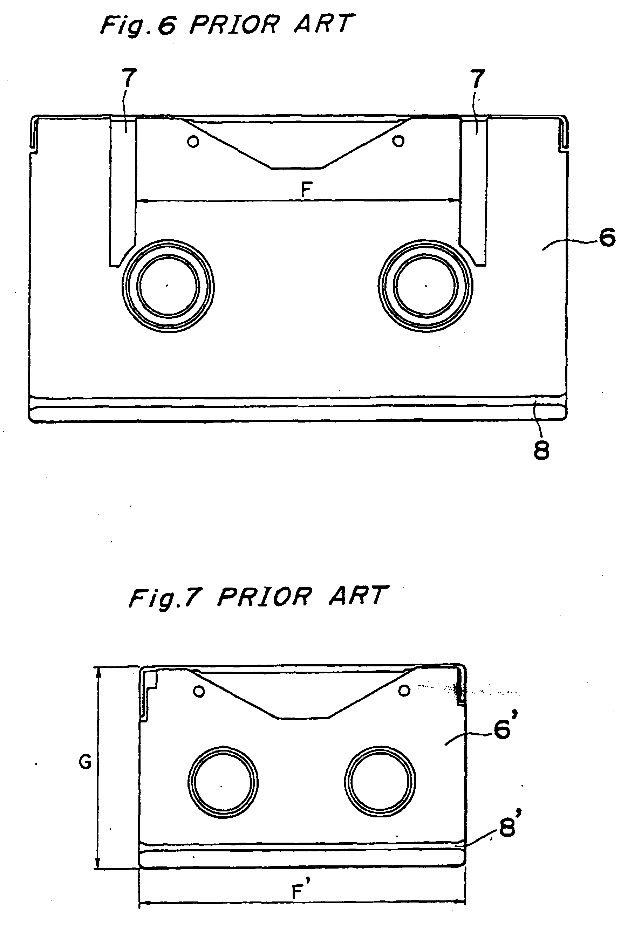

As shown in Fig. 6, on the bottom face of the large tape cassette 6, a set of cassette guide grooves 7 are formed along opposite side faces of the tape cassette 6 for guiding said tape cassette to the predetermined position on the cassette holder (not shown here).

The distance F between said cassette guide grooves 7 is formed to be generally equal to a longitudinal length F' of the small tape cassette 6' in Fig. 7.

The large tape cassette 6 is also formed with a second cassette guide groove 8 on its bottom face along the rear side face thereof.

As shown in Fig. 7, the small tape cassette 6' is not formed, on its bottom face, with the set of cassette guide grooves 7 as in the large tape cassette 6, but is only provided with a guide groove 8' similar to the above second cassette guide groove 8 along the rear side face thereof.

Moreover, the second cassette guide grooves 8 and 8' are set to be equal in the distance from the rear faces of the respective tape cassettes 6 and 6' to the center of the width of said grooves 8 and 8'. However, the widths and depths of the respective grooves of the second cassette guide grooves 8 and 8' are different from each other.

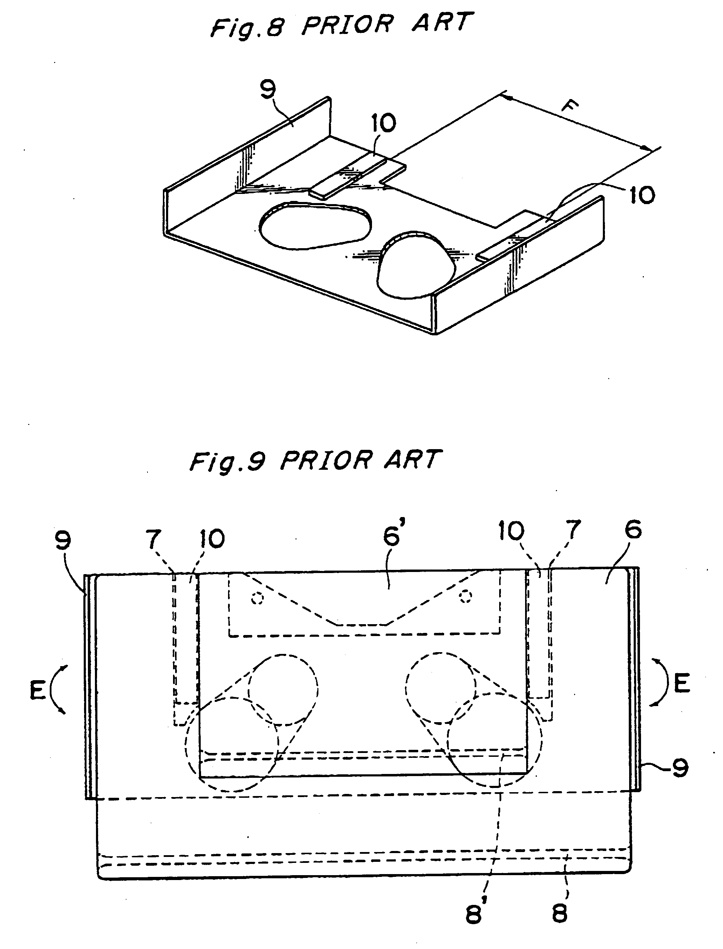

Incidentally, when the large or small tape cassette 6 or 6' is to be loaded into a VTR, said tape cassette is inserted into the tape holder 9 provided with a set of cassette guiding protrusions 10 as shown in Fig. 8.

During the above insertion, in the case of the small tape cassette 6', said cassette 6' is subjected to the positional restriction to the predetermined position of the cassette holder 9 while the set of the cassette guiding protrusions 10 are contacting opposite side faces of the tape cassette 6' as shown in Fig. 9.

Meanwhile, in the case of the large tape cassette 6, the set of cassette guide protrusions 10 are received by the corresponding set of cassette guide grooves 7 of the tape cassette 6 for the positional restriction of said tape cassette 6 at the predetermined position.

As described above, if such set of tape cassette guide means provided with a certain interval therebetween is employed, the undesirable side play of the large or small tape cassette 6 or 6' in the cassette holder 9 may be reduced as compared with that in the conventional first example, and thus, the positional restriction may be stably achieved.

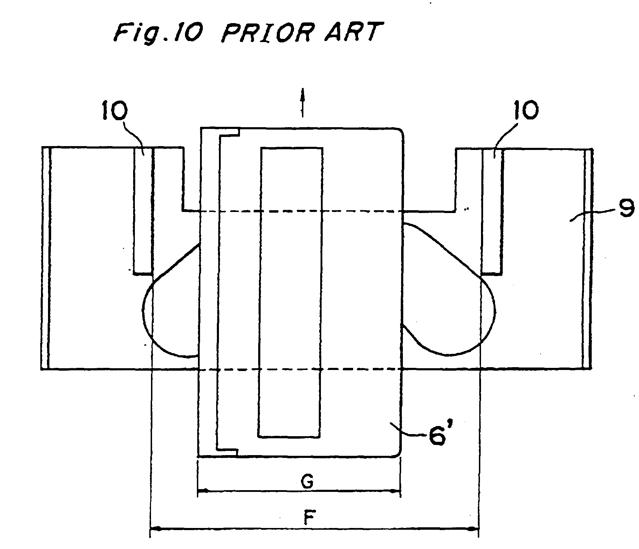

However, in the known arrangement as described so far, since the distance F between the set of cassette guide protrusions 10 (or the set of grooves 7) is larger than a depth G of the small tape cassette 6' (F>G) as shown in Fig. 10, if the small tape cassette 6' is inserted into the cassette holder 9 in the vertical direction by mistake, it enters the inner mechanism of the VTR, thus resulting in breakage of said VTR. Such a problem also took place in the tape cassettes of the conventional first example.

Moreover, in the above conventional arrangements, there has also been such a disadvantage that, since the cassette guide protrusions 10 are provided at the left and right portions of the cassette holder 9, it is required to pay attention to both of the protrusions 10 at the left and right sides during insertion of the large or small tape cassette 6 or 6', thus resulting in some difficulty for the positional restriction of the large or small tape cassette 6 or 6'.

From EP-A-334 257 an automatic video cassette changer is known which is capable of selectively loading cassettes of various sizes. The tape cassettes are provided with guide grooves on a bottom face of the cassette housing, and the cassette guide grooves are provided with wider and narrower sections.

Finally, from EP-A-286 751 a cassette tape recording and/or reproducing apparatus, including cassettes therefore, is known, in which a relatively large-sized tape cassette has a width, measured in transverse direction, which is larger than the width of a standard, small-sized tape cassette. The large cassette has a bottom surface with a plurality of grooves extending at right angles to the transverse direction and spaced from each other by a distance which is equal to the width of the small cassette. The apparatus includes a cassette holder having a pair of parallel guide rails spaced apart for reception in the grooves of the large cassette or for engagement of confronting surfaces of the guide rails with side surfaces of the smaller cassettes.

It is an essential object of the present invention to provide a tape cassette loading system including a plurality of tape cassettes in different sizes, e.g. small and large tape cassettes to be loaded in a cassette holder of a video tape recorder or the like, in which erroneous insertion of the small tape cassette in a longitudinal direction into the video tape recorder or the like is advantageously prevented.

Another object of the present invention is to provide a tape cassette loading system of the above described type which may be stably and readily subjected to positional restriction upon loading thereof into the cassette holder.

In accomplishing these objects, according to the invention a tape cassette loading system as defined in the precharacterizing clause of claim 1 is characterized by the small tape cassette further including second cassette guide grooves normal to the longitudinal direction further provided at opposite sides with said first cassette guide groove positioned therebetween; the large cassette further including second cassette guide grooves normal to the longitudinal direction further provided at opposite sides with said first cassette guide groove positioned therebetween; said first and second cassette guide grooves of the large tape cassette being disposed at similar positions as the positions of said first and second cassette guide grooves of said small tape cassette when said large and small tape cassettes are aligned at the central portion in the longitudinal direction, and also at front faces thereof; the cassette holder being provided with a set of cassette guide protrusions corresponding to the second cassette guide grooves on the small and large tape cassettes; whereby when a distance between opposing faces of said cassette erroneous insertion preventing projection and each of said cassette guide protrusions is represented by I', and a distance between opposing faces of each said cassette guide protrusions and a side wall of said cassette holder is denoted by K', said cassette guide protrusions are disposed in such positions as to establish relations I' < J and K' < J.

Preferable embodiments are defined in the dependent claims.

Since the plurality of cassette guide grooves are provided at the interval smaller than the depth of the small tape cassette, with corresponding protrusions being provided on the cassette holder, even if the small tape cassette is inserted into the cassette holder in a wrong direction by mistake, it is obstructed by the protrusions so as not to enter the VTR, and thus, the serious problem related to the breakage of the VTR conventionally taking place, may be advantageously eliminated.

Furthermore, since inclined faces are provided at the opening portions of the cassette guiding grooves, while the width of one of the grooves at its opening portion is set to be larger than that at its inner side in the direction of the depth, engagement between the cassette guide protrusions and the cassette guide grooves may be effected smoothly.

These and other objects and features of the present invention will become apparent from the following description taken in conjunction with the preferred embodiment thereof with reference to the accompanying drawings, in which;
Fig. 1 is a bottom plan view of a conventional large tape cassette (already referred to),
Fig. 2 is also a bottom plan view of a conventional small tape cassette (already referred to),
Fig. 3 is a perspective view of a known cassette holder on which the large or small tape cassette in Fig. 1 or 2 may be loaded (already referred to),
Fig. 4 is a top plan view of the cassette holder in Fig. 3 showing the state in which the known large or small tape cassette of Fig. 1 or 2 is mounted (already referred to),
Fig. 5 is a top plan view showing the state of erroneous insertion of the known small tape cassette into the cassette holder (already referred to),
Fig. 6 is a bottom plan view of another conventional large tape cassette (already referred to),
Fig. 7 is also a bottom plan view of another conventional small tape cassette (already referred to),
Fig. 8 is a perspective view of another known cassette holder in which the known large or small tape cassette in Fig. 6 or 7 may be loaded (already referred to),
Fig. 9 is a top plan view of the cassette holder in Fig. 8 showing the state in which the known large or small tape cassette in Fig. 6 or 7 is mounted (already referred to),
Fig. 10 is a top plan view showing the state of erroneous insertion of the known small tape cassette into the large and small cassette holder of Fig. 8 (already referred to),
Fig. 11 is a perspective view of a small tape cassette according to the one preferred embodiment of the present invention,
Fig. 12 is an exploded perspective view of the small tape cassette in Fig. 11,
Fig. 13 is a perspective view showing a bottom face of the small tape cassette in Fig. 11,
Fig. 14 is a perspective view of a large tape cassette according to the one preferred embodiment of the present invention,
Fig. 15 is an exploded perspective view of the large tape cassette in Fig. 14,
Fig. 16 is a perspective view showing a bottom face of the large tape cassette in Fig. 14,
Fig. 17(a) is a top plan view for explaining the positional relation of the arrangements on the bottom faces of the large and small tape cassettes according to the present invention,
Fig. 17(b) is a cross section on an enlarged scale, taken along the line XVII(b) - XVII(b) in Fig. 17(a),
Fig. 18 is a perspective view showing construction of a cassette holder for the small tape cassette according to the present invention,
Fig. 19 is a top plan view showing the state in which the small tape cassette is loaded on the cassette holder of Fig. 18,
Fig. 20 is a perspective view showing construction of a cassette holder for the large and small tape cassettes according to the present invention,
Fig. 21 is a top plan view showing the state in which the large or small tape cassette is loaded on the cassette holder of Fig. 20,
Fig. 22 is a top plan view of the cassette holder for the large and small tape cassettes for explaining its erroneous insertion preventing effect,
Fig. 23(a) and 23(b) are top plan views similar to Fig. 17(a), which particularly show modifications thereof in which the number of cassette guide grooves is altered,
Fig. 24 is a perspective view of another cassette holder for the large and small tape cassettes, arranged to insert the large or small tape cassette in a longitudinal direction,
Fig. 25 is a cross section showing, on an enlarged scale, a cassette positioning projection provided in the cassette holder of Fig. 24,

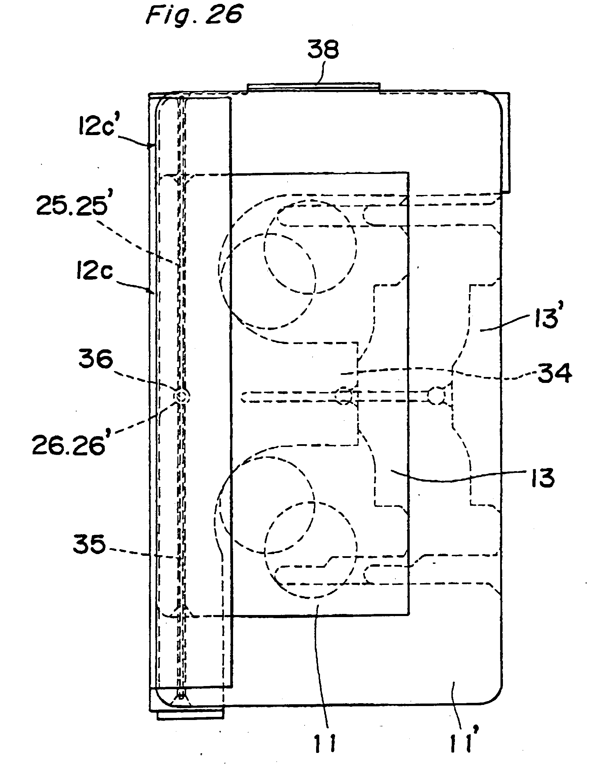

Fig. 26 is a top plan view of the cassette holder of Fig. 24 showing the state in which the large or small tape cassette is mounted, and
Fig. 27 is a view similar to Fig. 26, which particularly shows a further modification thereof.

### DETAILED DESCRIPTION OF THE INVENTION

Before the description of the present invention proceeds, it is to be noted that like parts are designated by like reference numerals throughout the accompanying drawings.

Referring now to the drawings, the tape cassette means including large and small tape cassettes according to one preferred embodiment of the present invention will be described hereinafter.

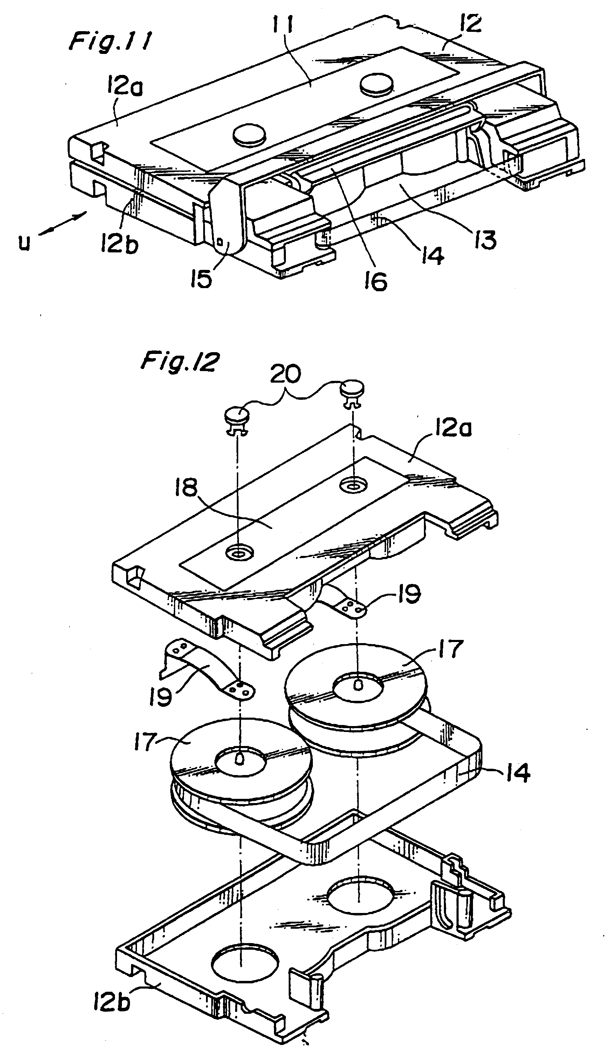

As shown in Fig. 11, the small tape cassette 11 generally includes an upper half portion 12a and a lower half portion 12b molded by a synthetic resin material, and combined with each other to constitute a cassette shell housing 12, in which a reel means, i.e. a pair of reels 17 wound with a magnetic tape 14 are accommodated. (Fig. 12).

At a front face of the cassette shell housing 12, there is provided an elongated opening portion 13 along which the magnetic tape 14 is movably extended, and which is normally covered by a front cover 15 and a rear cover 16 pivotally provided as described more in detail later.

In the upper half portion 12a, a transparent window 18, e.g. made of a synthetic resin material is formed in order to ensure the remaining amount of the magnetic tape 14.

On the upper portions of the reels 17, a pair of metallic plate springs 19 for depressing the reels 17 towards the lower half portion 12b and a pair of reel displacing mount reducing members 20 capable of reducing displacing amount of said reels by an external means are respectively provided.

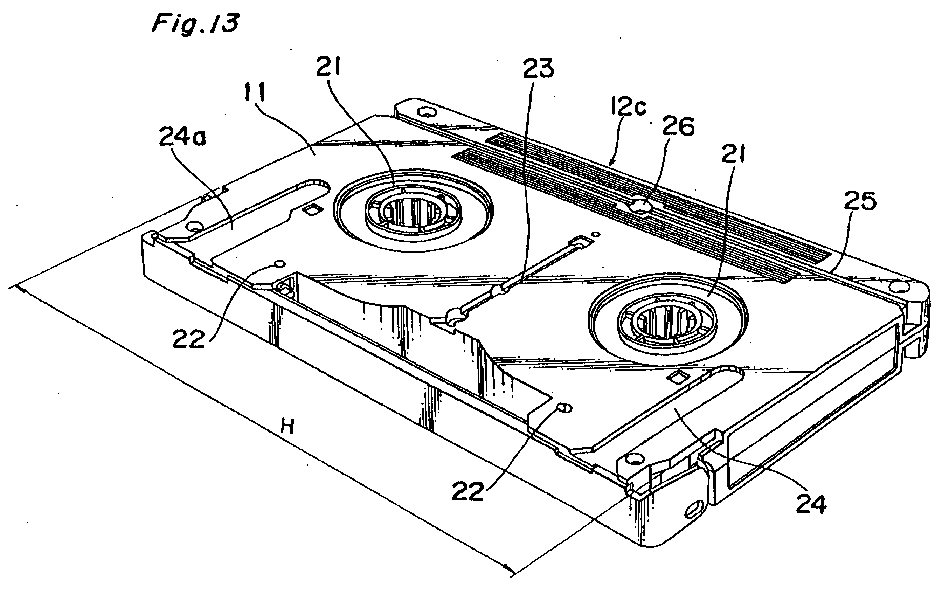

Subsequently, the arrangement on a bottom face of the small cassette 11 will be described with reference to Fig. 13.

As shown in Fig. 13, on the bottom face of the small tape cassette 11, there are formed a pair of reel base insertion holes 21 for receiving a corresponding pair of reel bases (not shown) provided on a related apparatus such as a VTR, and cassette positioning holes 22 to be fitted with cassette positioning pins (not shown) also provided on the related apparatus.

At a central portion in a longitudinal direction of the small tape cassette 11, a cassette guide groove 23 is formed to receive a cassette erroneous insertion preventing protrusion (not shown here) provided on a cassette holder of the related apparatus. Moreover, at left and right sides of said cassette guide groove 23 at the center, a set of cassette guide grooves 24 and 24a are provided for engagement with a corresponding set of cassette guide protrusions (not shown here) provided on the cassette holder, with such guide grooves 23,24, and 24a being positioned in generally a parallel relation to each other. Along and adjacent to a rear face side 12C of the small tape cassette 11 in a direction parallel to the longitudinal direction of said tape cassette, and at right angles with said cassette guide grooves 23,24 and 24a referred to above, another cassette guide groove 25 is formed to be used when the small tape cassette 11 is inserted in a vertical or longitudinal direction (to be described later). Furthermore, at a central portion in the longitudinal direction of the cassette guide groove 25, a cassette positioning recess 26 of a circular shape is formed for positioning of the small tape cassette within the cassette holder. This cassette positioning recess 26 has a depth larger than that of the cassette guide groove 25.

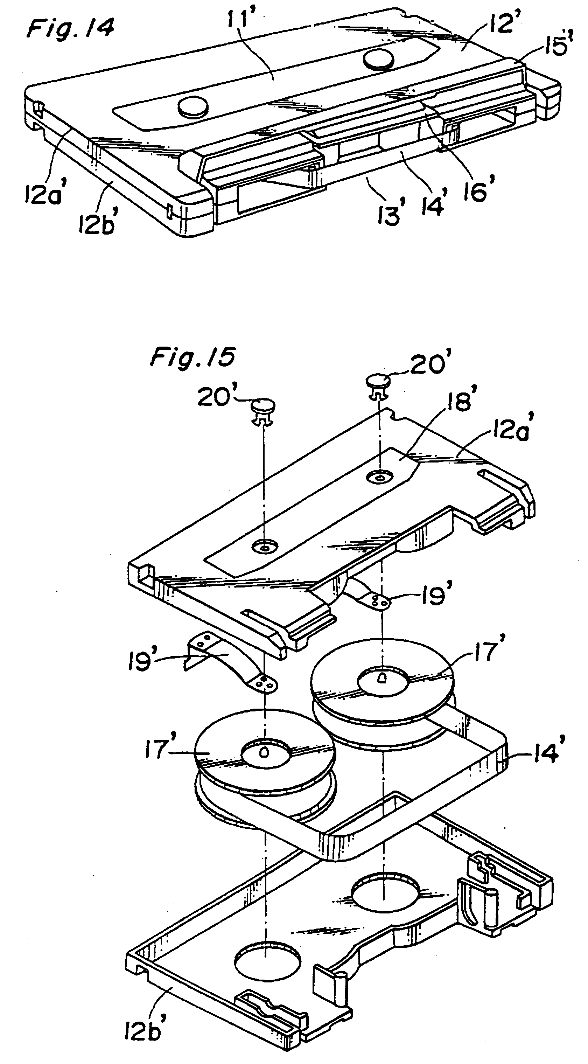

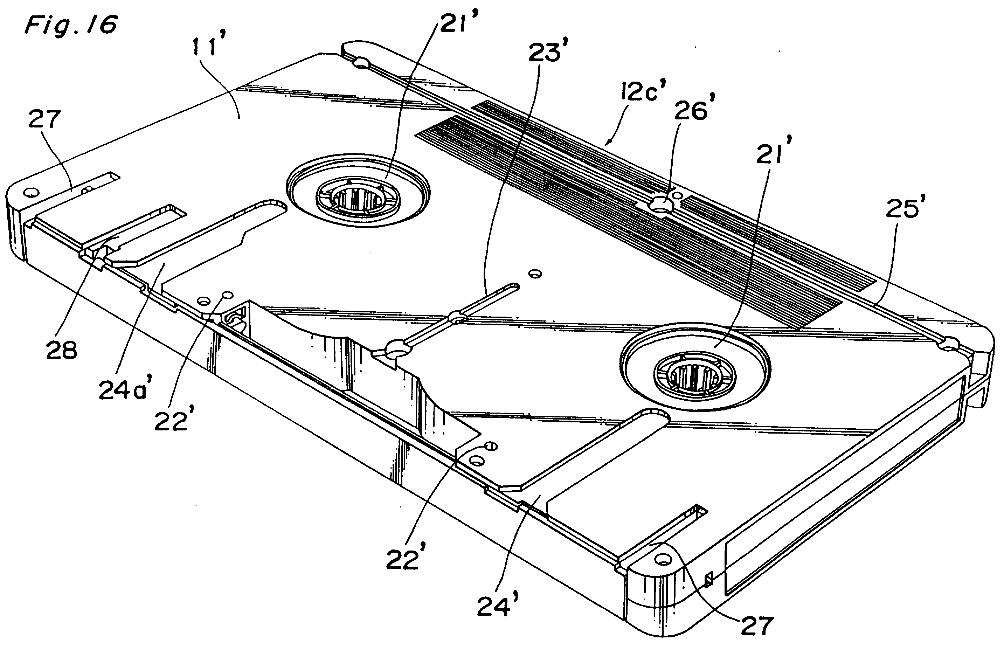

Figs. 14 and 15 show the construction of the large tape cassette 11'. Since the fundamental structure of the large tape cassette 11' is generally similar to that of the small tape cassette 11 except for provision of further grooves to be described below in Fig. 16, detailed description thereof will be abbreviated here for brevity of explanation, with like parts being designated by like reference numerals affixed with primes.

As shown in Fig. 16, the large tape cassette 11' is further formed, on its bottom surface, with cover member lock release grooves 27 at opposite side of the guide grooves 24' and 24a' for receiving cover member lock release members provided at the side of the cassette holder for releasing lock members which lock the front and rear cover members 15' and 16' (Fig. 14) against opening, and a cover member lock release groove 28 for the small tape cassette provided between the grooves 27 and 24a'.

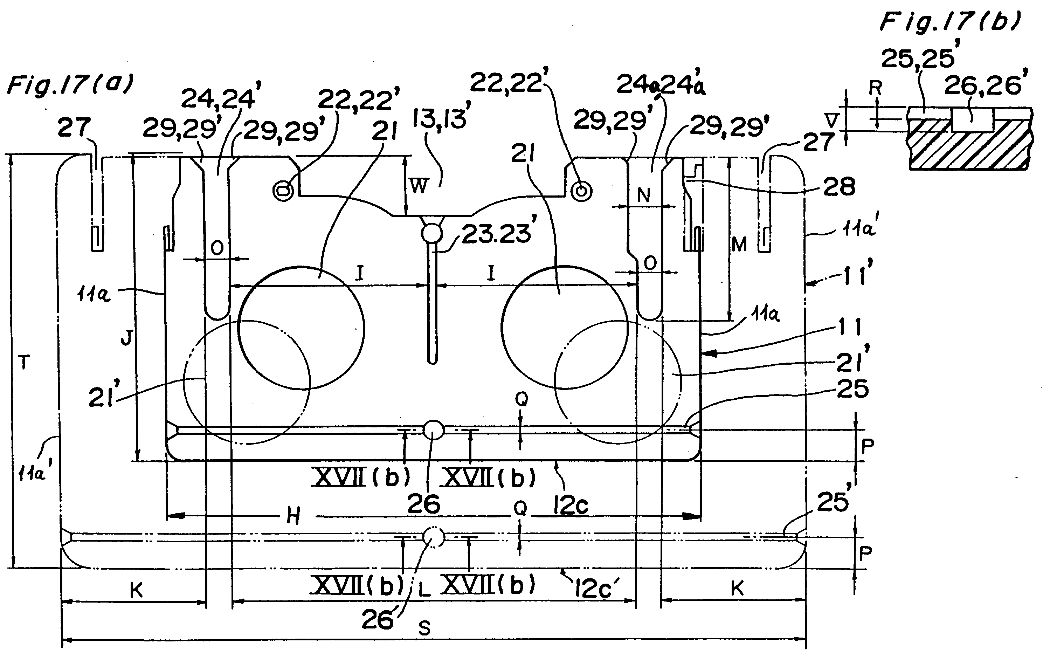

Subsequently, by referring also to Figs. 17(a) and 17(b), positional relation in the bottom face arrangements of the small and large cassettes 11 and 11' will be described.

In Fig. 17(a), the cassette positioning holes 22 and 22' of the small and large tape cassettes 11 and 11' are in a positional relation common to each other. It is to be noted here that Fig. 17(a) shows the state on the bottom faces where the positioning holes 22 and 22' of the small and large tape cassettes 11 and 11' are overlapped each other, and with the cassette positioning holes 22 and 22' being set as reference points, the cassette guide grooves 23 and 23', the set of cassette guide grooves 24,24',24a and 24a', and also the opening portions 13 and 13' of the small and large tape cassette are also in the positional relation common to each other.

Meanwhile, it is so arranged that, when a distance between the cassette guide groove 23 or 23' of the small or large tape cassette 11 or 11' and the set of the left or right cassette guide groove 24,24', 24a or 24a' is represented by I, the depth of the small tape cassette is denoted by J, and a distance from the cassette guide groove 24' or 24a' to the side face of the large tape cassette 11' is shown by K as illustrated in Fig. 17(a), the relation thereof is set as in J>K, I.

On the other hand, since the set of the cassette guide grooves 24,24',24a and 24a' are intended to subject the small and large tape cassettes 11 and 11' to stable positional relation at the predetermined position within the cassette holder, they become resembling the one cassette guide groove mechanism referred to earlier in the conventional example I if a length L is short, and thus, it becomes necessary to provide a certain predetermined distance therebetween. Therefore, according to the present embodiment, said guide grooves 24 and 24a or 24' and 24a' are positioned at opposite sides of the opening portion 13 or 13' of the small and large tape cassette 11 or 11'. Additionally, it is preferable that the depth M of each of the set of cassette guide grooves 24,24',24a and 24a' is on a longer side, and if it is longer than the depth W of the opening portion 13 or 13', the positional restriction may be stably effected.

Furthermore, at opening portions of the set of cassette guide grooves 24,24',24a, and 24a', there are provided inclined faces 29 and 29'. In the cassette guide groove 24a or 24a' at one side, when a width at the opening portion side is represented by N, and that at the inner depth side is denoted by O, the relation is set at N>O. It is to be noted that the width of the guide groove 24 or 24' at the other side is set to be equal to O along the entire length of said groove.

The cassette guide grooves 25 and 25' for inserting the small and large tape cassettes 11 and 11' in the vertical direction, are formed at the same distance P from the rear face sides 12c(12c') of the respective tape cassettes.

Similarly, the width Q and depth R of the cassette guide grooves 25 and 25' of the small and large tape cassettes 11 and 11', and the shape of the cassette positioning recesses 26 and 26' located at the central portions of said cassette guide grooves are also set to e generally equal to each other.

It is to be noted that the depth V of the cassette positioning recesses 26 or 26' larger than the depth R of the cassette guide groove 25 or 25'.

The construction of the small and large tape cassettes 11 and 11' according to the present invention are as described so far.

Hereinafter, the construction of a cassette holder for inserting the small and large tape cassettes 11 and 11' as described above in the lateral direction will be described.

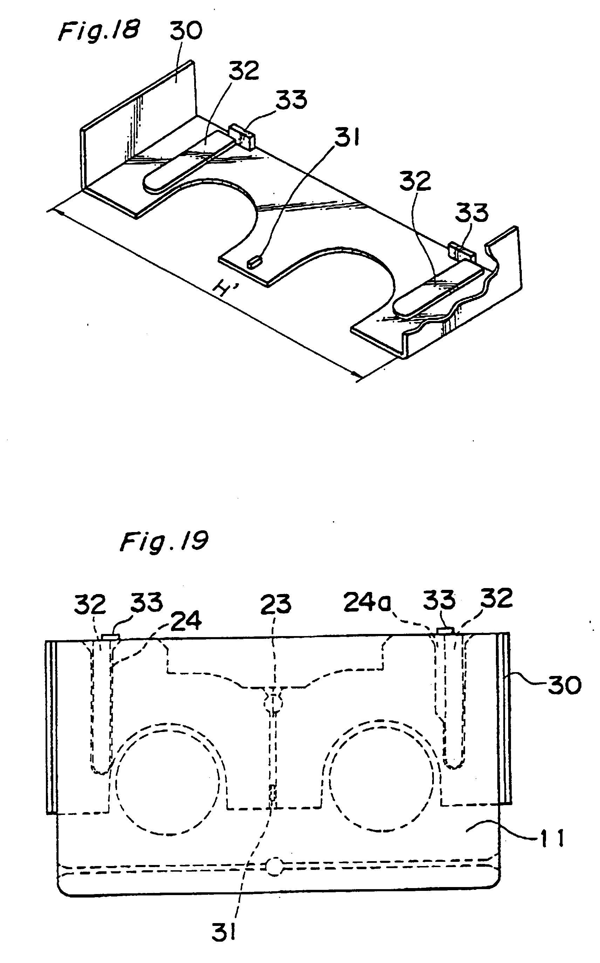

As shown in Fig. 18, the cassette holder 30 for the small tape cassette 11 has a front width H' generally equal to the longitudinal length of said small tape cassette, and is provided, at its upper face, with a cassette erroneous insertion preventing projection 31 formed at a central portion, and a set of cassette guide protrusions 32 corresponding in dimensions to the set of cassette guide grooves 24 and 24a of the small tape cassette 11 and provided at opposite sides of said protrusion 31 as shown. Moreover, each of the cassette guide protrusions 32 is formed, at its forward end portion, with a cassette front face positioning projection 33.

When the small tape cassette 11 according to the present invention is inserted into the cassette holder 30 as described above, the set of cassette guide protrusions 32 respectively engage the set of the cassette guide grooves 24 and 24a to guide the small tape cassette 11 to the predetermined position, as shown in Fig. 19, and when the front face of the cassette 11 contacts the front face positioning projections 33, positioning in the cassette holder 30 is completed. In the above state, the cassette erroneous insertion preventing projection 31 is in a state where it enters the cassette guide groove 23 at the central portion of the small tape cassette 11. Thereafter, the cassette holder 30 is moved, and the small tape cassette 11 is set in a state capable of effecting recording or reproducing.

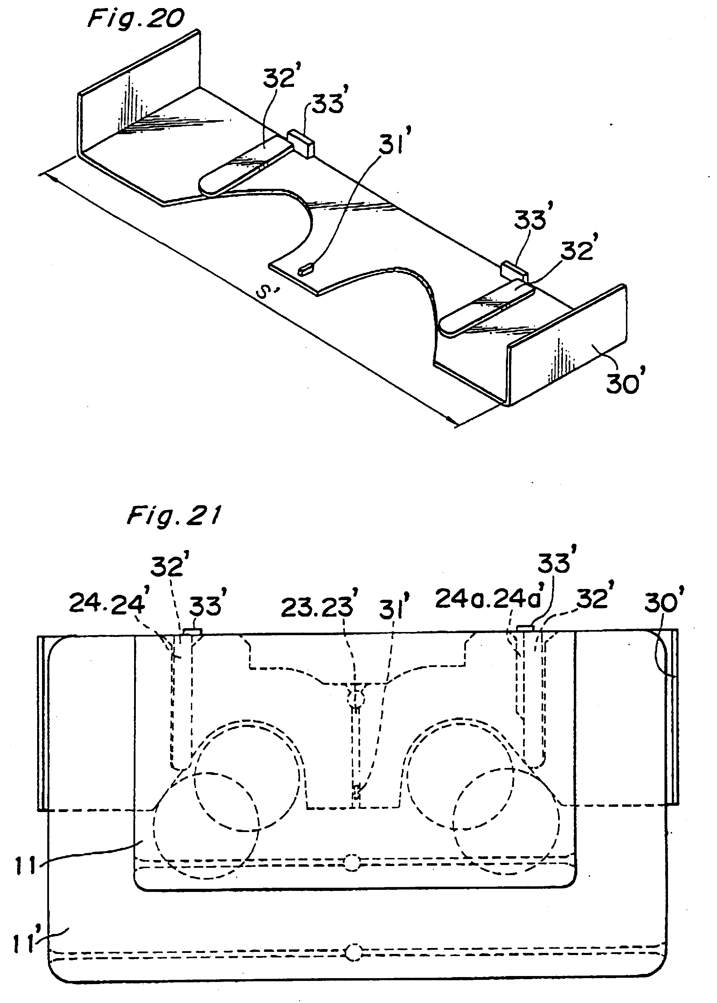

Subsequently, the construction of a cassette holder 30' for inserting the small and large tape cassettes 11 and 11' in the lateral direction will be described (Fig. 20).

Since the fundamental structure of the small and large tape cassette holder 30' is generally the same as that of the small tape cassette holder 30 referred to above, detailed description thereof is abbreviated here for brevity of explanation, with like parts being designated by like reference numerals affixed with primes.

As shown in Fig. 20, the cassette holder 30' for the small and large tape cassettes 11 and 11' has a front width S' generally equal to the longitudinal length S of said large tape cassette 11', and is provided, at its upper face, with a cassette erroneous insertion preventing projection 31' formed at a central portion, and a set of cassette guide protrusions 32' corresponding in dimensions to the set of cassette guide grooves and provided at opposite sides of said protrusion 31', in the similar positional relation as in the small tape cassette holder 30 in Fig. 18, with each of the cassette guide protrusions 32' being formed, at its forward end portion, with a cassette front face positioning projection 33'.

When the large tape cassette 11' according to the present invention is inserted into the small and large cassette holder 30' as described above, it is loaded in the similar procedures as in the small tape cassette 11 described earlier.

Meanwhile, when the small tape cassette 11 according to the present invention is inserted into the small and large cassette holder 30' having a wide front portion, the set of cassette guide protrusions 32' respectively engage the set of the cassette guide grooves 24 and 24a of the small tape cassette to guide said tape cassette 11 to the predetermined position for positional restriction.

In the above case, the cassette erroneous insertion preventing projection 31' has similarly entered the cassette guide groove 23.

By the arrangement according to the present invention as described so far, since the positioning through combination of the respective tape cassettes and the respective cassette holders is effected by the set of cassette guide grooves 24,24',24a and 24a' and the corresponding set of cassette guide protrusions 32 and 32' provided with a predetermined interval, the positional restriction may be stably effected.

Moreover, since the inclined faces 29 and 29' are provided (Fig. 17(a)) at the opening portions of the pair of cassette guide grooves 24,24',24a and 24a', while the width N of the opening portion at one side is formed larger, there is available such an effect that the engagement with respect to the cassette guide protrusions 32 and 32' may be facilitated.

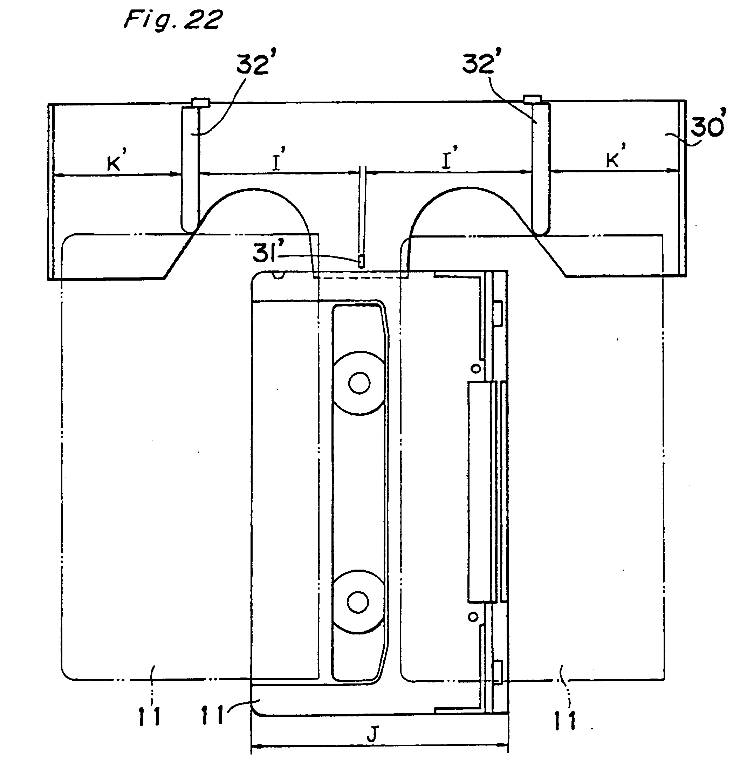

Additionally, as shown in Fig. 22, even when the small tape cassette 11 is inserted vertically, by mistake, into the small and large tape cassette holder 30', since the distance I' between the cassette erroneous insertion preventing projection 31' and the cassette guide protrusions 32' located at the opposite side of the projection 31', and the distance K' between the cassette guide protrusion 32' and the side face of the cassette holder 30' is smaller than the depth J of the small tape cassette 11, said small tape cassette 11 is brought into contact with the cassette erroneous insertion preventing projection 31' or the cassette guide protrusion 32' even if said small tape cassette 11 is vertically inserted from any position, thereby being prevented from entry into the apparatus.

Accordingly, the serious problem related to the breakage of the apparatus taking place in the conventional examples 1 and 2 may be advantageously prevented.

So far, although the prevention of erroneous insertion in the direction of u of the small tape cassette shown in Fig. 11 has been mainly described, erroneous insertion at other faces than the normal inserting faces, such as erroneous insertion related to the front and reverse faces or reverse insertion in the front face at other respective faces, etc. of the small and large tape cassettes 11 or 11' may also be prevented by the arrangement of the present invention.

Furthermore, as shown in Fig. 17, although the cassette guide groove 23 or 23' is provided at the central portion of the tape cassette 11 or 11', since the reels are not located within such central portion of the cassette shell housing, the thickness of the lower half 12b of the cassette shell housing may be readily increased, and therefore, the grooves are easily formed and may be extended up to the rear face side 12c and 12c' of the tape cassette.

Consequently, if the cassette guide groove 23 or 23' is extended up to the rear face side 12c or 12c' of the tape cassette beyond the set of the cassette guide grooves 24,24',24a or 24a', effects as follows may be obtained.

In short, by the above construction, as shown in Fig. 20, the cassette erroneous insertion preventing projection 31' of the cassette holder 30' may be provided in the vicinity of the cassette insertion opening side (forward side). As a result, such a remarkable effect is available that, upon insertion of the tape cassette 11 or 11', erroneous insertion can be detected in a state where the tape cassette has just entered the cassette holder 30'.

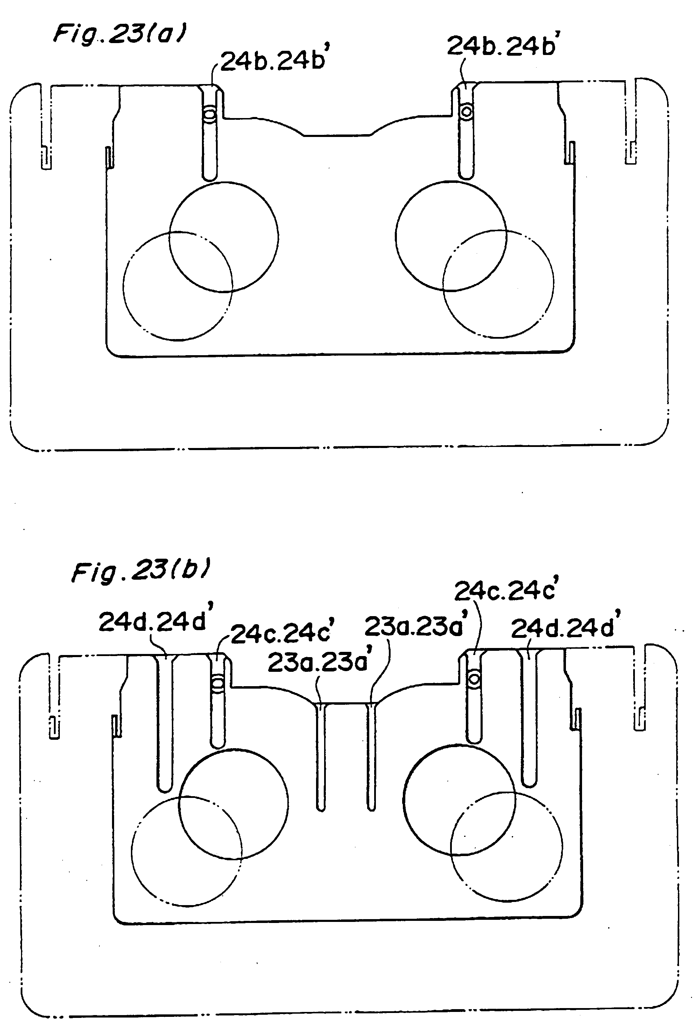

It should be noted here that, in the foregoing embodiment, although the description has been given with respect to the three cassette guide grooves 24,24',24a,24a',23 and 23', the concept of the present invention is not limited in its application, to the above, but may be modified, for example, to two cassette guide grooves 24b and 24b' as shown in Fig. 23(a) or to a plurality of cassette guide grooves 23a,23a',24c,24c',24d and 24d' as shown in Fig. 23(b) to obtain the effect similar to that referred to earlier.

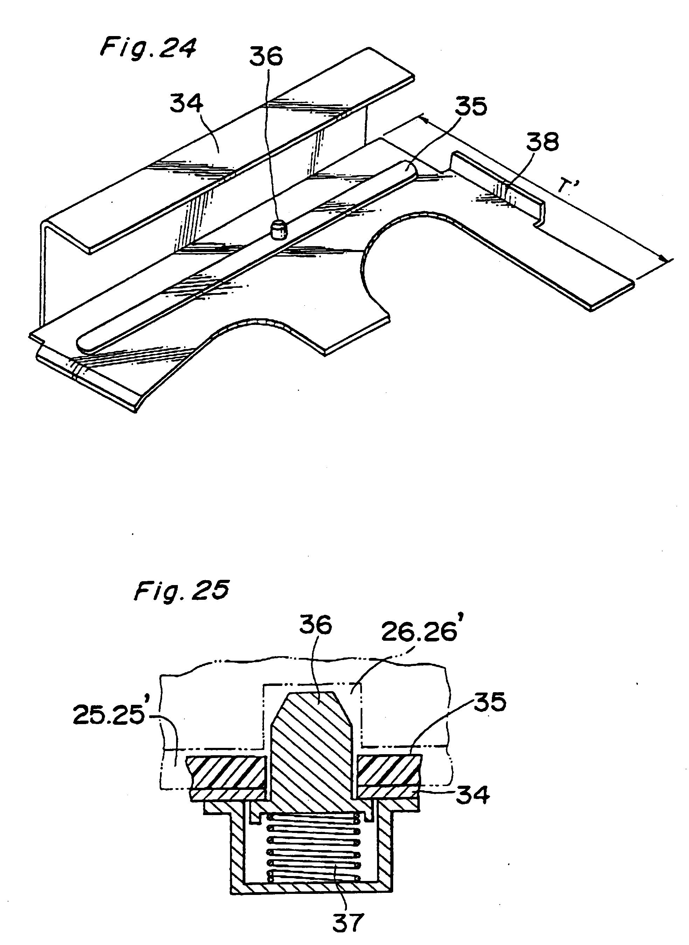

Subsequently, another small and large tape cassette holder 34 arranged to insert the small and large tape cassette 11 or 11' in the vertical direction will be explained with reference to Fig. 24.

As shown in Fig. 24, the width T' of the cassette holder 34 is set to be generally equal to the depth T (Fig. 17(a)) of the large tape cassette 11'.

Adjacent to the side face of the cassette holder 34, a cassette guide protrusion 35 is provided for engagement with the cassette guide groove 25 or 25' of the small or large tape cassette 11 or 11' to guide said tape cassette, while on said cassette guide protrusion 35, a cassette positioning projection 36 is provided for engagement with the cassette positioning recess 26 or 26' of the small or large tape cassette 11 or 11'.

As shown in Fig. 25 representing a cross section in the vicinity of the cassette positioning projection 36 on an enlarged scale, said projection 36 is elastically urged by a coil spring 37 so as to project from the surface of the cassette holder 34.

The cassette holder 34 is further provided, at one edge portion thereof, with cassette side face positioning projection 38 as shown in Fig. 24.

When the large tape cassette 11' is inserted into the cassette holder 34 as described so far, the cassette guide protrusion 35 of said cassette holder 34 engages the cassette guide groove 25' of the large tape cassette 11' so as to guide said tape cassette up to the predetermined position, and upon contact of the side face of said tape cassette 11' with the cassette side face positioning projections 38, positioning of the large tape cassette 11' within the cassette holder 34 is completed. In this case, the cassette positioning projection 36 is brought into the state whre it has been engaged with the cassette positioning recess 26'. Thereafter, the cassette holder 34 is displaced, whereby the large tape cassette 11' is set in the state ready for recording or reproducing.

Subsequently, upon insertion of the small tape cassette 11 into the cassette holder 34, the cassette guide protrusion 35 is fitted into the cassette guide groove 25 of the small tape cassette 11 for guiding. When the small tape cassette 11 is further inserted towards the inner side, and the cassette positioning recess 26 of the tape cassette 11 is located above the cassette positioning projection 36 of the cassette holder 34, said projection 36 engages the recess 26, whereby the small tape cassette 11 is positioned on the way to the innermost portion of the cassette holder 34. In other words, in the above state, the side face of the small tape cassette 11 is spaced from the cassette side face positioning projections 38, and as compared with the state where the large tape cassette 11' is loaded, said small tape cassette 11 is positioned at the central portion of the cassette holder 34. By this arrangement, since the front opening portion 13 or 13' of the tape cassette 11 or 11' which receives members of the related apparatus is located at the central portion of the tape cassette 11 or 11', designing and manufacture of the mechanism at the side of the related mechanism are comparatively facilitated.

In the arrangement as described above, since the cassette positioning recess 26 or 26' of the small or large tape cassette 11 or 11' is located at the common position from the cassette rear face 12c or 12c', the positioning of the small or large tape cassette may be commonly effected by the provision of one cassette positioning projection 36 at the side of the cassette holder 34.

Moreover, since the cassette positioning recesses 26 and 26' are located on the cassette guide grooves 25 and 25', positioning of the tape cassettes can be effected stably and positively.

It is to be noted here that in the foregoing embodiments, although the shapes of the cassette positioning recesses 26 and 26' and cassette positioning projections 36 are described to be circular, such shapes need not necessarily be circular, but may be modified into a polygonal shape such as a square shape or the like depending on requirements.

It should also be noted that if the cassette positioning recess 26 or 26' is commonly utilized with a screw setting portion for clamping the tape cassette 11 or 11', the screw clamping work during assembly of each tape cassette may be simplified.

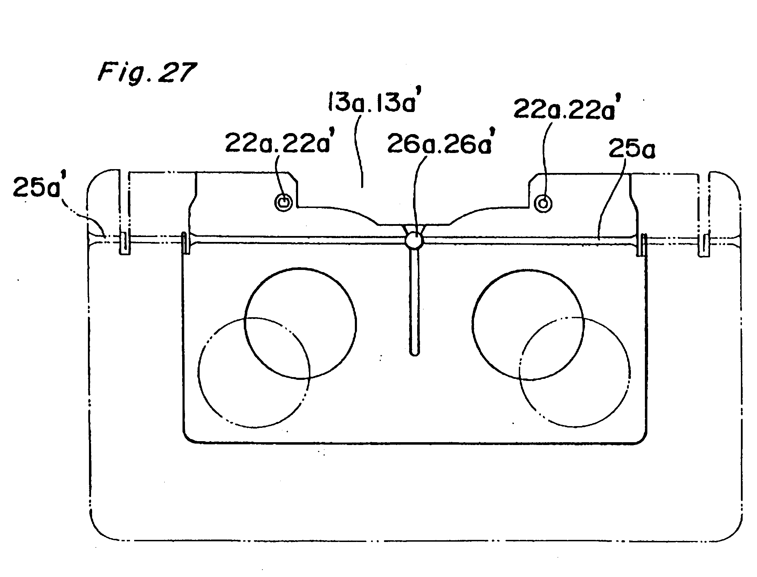

It should further be noted that in the foregoing embodiment, although the cassette positioning recess 26 or 26' and the cassette guide grooves 25 or 25' are described as provided at the same distance from the rear face 12c side of the cassette, the arrangement may be, for example, so modified as shown in Fig. 27 that a cassette positioning recess 26a or 26a' and a cassette guide groove 25a or 25a' are provided at the same distance from the cassette positioning holes 22a and 22a' at the side close to the opening portion 13a or 13a' of the tape cassette.

As is clear from the foregoing description, according to the small and large tape cassettes of the present invention, it becomes possible, during insertion thereof into the cassette holder, to selectively insert the tape cassettes in the lateral or vertical direction, while positioning of the tape cassettes within the cassette holder may be readily effected with stability, and thus, erroneous insertion of the tape cassettes at respective faces thereof can be advantageously prevented.

In the foregoing embodiments, although the tape cassette means according to the present invention has been described with respect to the two kinds, i.e. small and large tape cassettes 11 and 11', the concept of the present invention is not limited, in its application, to such two kinds of tape cassettes alone, but may be readily applied to tape cassettes of more than three kinds in different sizes as well.

Thus, according to the present invention, remarkable effects as listed below may be achieved.
(1) In the cassette holder capable of loading small and large tape cassettes in the lateral direction, erroneous insertion of the respective tape cassettes may be prevented.
(2) In the cassette holder capable of loading respective tape cassettes in the lateral direction, positioning of the tape cassettes within the cassette holder may be readily and stably effected.
(3) In the cassette holder capable of loading respective tape cassettes in the vertical direction, positioning of each tape cassette within the cassette holder can be effected by the common positioning projection.

Although the present invention has been fully described by way of example with reference to the accompanying drawings, it is to be noted here that various changes and modifications will be apparent to those skilled in the art. Therefore, unless otherwise such changes and modifications depart from the scope of the present invention, they should be construed as included therein.

## Claims

1. A tape cassette loading system with a set of tape cassettes from a small size cassette to a large size cassette, these cassettes to be inserted into a cassette holder (30') with their long side, the system comprising
(a) a small tape cassette (11) including a small cassette housing of generally a cuboid shape with a longitudinal length H and a depth J (J < H), and a pair of reels provided within said small cassette housing, said small cassette housing being formed with a first cassette guide groove (23) normal to the longitudinal direction and at a central portion in a longitudinal direction on a bottom face of said small cassette housing for guiding it into the cassette holder;
(b) a large tape cassette (11') including a large cassette housing also of generally a cuboid shape with a longitudinal length S larger than said longitudinal length H and a depth T larger than said depth J of said small tape cassette (11) and a pair of reels provided within said large cassette housing, said large cassette housing being formed with a first cassette guide groove (23') normal to the longitudinal direction and at a central portion in a longitudinal direction on a bottom face of said large cassette housing for guiding it into the cassette holder;
(c) said cassette holder (30') provided with a cassette erroneous insertion preventing projection (31') formed at a central portion and corresponding to the first cassette guide grooves (23, 23');
characterized by
(d) the small tape cassette (11) further including second cassette guide grooves (24, 24a) normal to the longitudinal direction further provided at opposite sides with said first cassette guide groove (23) positioned therebetween;
(e) the large cassette further including second cassette guide grooves (24', 24a') normal to the longitudinal direction further provided at opposite sides with said first cassette guide groove (23') positioned therebetween;
(f) said first and second cassette guide grooves (23',24',24'a) of the large tape cassette (11') being disposed at similar positions as the positions of said first and second cassette guide grooves (23; 24, 24a) of said small tape cassette (11) when said large and small tape cassettes (11, 11') are aligned at the central portion in the longitudinal direction, and also at front faces thereof;
(g) the cassette holder (30') being provided with a set of cassette guide protrusions (32') corresponding to the second cassette guide grooves (24, 24a; 24', 24a') on the small and large tape cassettes;
(h) whereby when a distance between opposing faces of said cassette erroneous insertion preventing projection (31') and each of said cassette guide protrusions (32') is represented by I', and a distance between opposing faces of each said cassette guide protrusions (32') and a side wall of said cassette holder (30') is denoted by K', said cassette guide protrusions (32') are disposed in such positions as to establish relations I' < J and K' < J.

2. A tape cassette loading system as claimed in claim 1, wherein each of said tape cassettes (11, 11') is formed, on its bottom face, with cassette positioning holes (22, 22') whereby the plurality of first and second cassette guide grooves (23, 23', 24, 24', 24a, 24a') are made common with each other in positional relation thereof on the basis of said cassettes positioning holes (22, 22') as a reference.

3. A tape cassette loading system as claimed in claim 2, wherein the plurality of said first and second cassette guide grooves (23, 23', 24, 24', 24a, 24a') are positioned in a generally parallel relation to each other.

4. A tape cassette loading system as claimed in claim 3, wherein each of said tape cassettes (11, 11') has an opening portion (13, 13') for receiving members of a related apparatus at its central front face portion, said second cassette guide grooves (24, 24a, 24', 24a') of the tape cassette being respectively provided at opposite sides of said opening portion (13, 13').

5. A tape cassette loading system as claimed in claim 4, wherein the depth of said second cassette guide grooves (24, 24a, 24', 24a') at the opposite face sides of each tape cassette (11, 11') is longer than the depth at the opening portion (13, 13') of the tape cassette.

6. A tape cassette loading system as claimed in claim 2 or 5, wherein the first cassette guide groove (23, 23') positioned at the central portion in the longitudinal direction of each tape cassette (11, 11') is extended towards the rear face side of the tape cassette beyond the second cassette guide grooves (24, 24a, 24', 24a') provided at the opposite face sides of said tape cassette (11, 11').

7. A tape cassette loading system as claimed in claim 2, wherein said first and second cassette guide grooves (23, 23', 24, 24', 24a, 24a') are formed, at the opening portions thereof, with inclined faces.

8. A tape cassette loading system as claimed in claim 7, wherein, when, in the set of second cassette guide grooves (24, 24', 24a, 24a') of each tape cassette (11, 11'), a width at the opening portion side of one of said second cassette guide grooves (24a, 24a') is set to be a first width (N), and another width at an inner depth side of said second cassette guide grooves (24a, 24a') is set to be a second width (0), the first width (N) is arranged to be larger than the second width (0).

9. A tape cassette loading system as claimed in claim 1, wherein each of said tape cassettes (11, 11') is formed, on its bottom face, with a cassette positioning recess (26, 26') for positioning upon loading of the tape cassette (11, 11') onto the cassette holder, said cassette positioning recess (26, 26') being provided at the same distance from the rear face of each of said tape cassettes (11, 11').

10. A tape cassette loading system as claimed in claim 9, wherein a third cassette guide groove (25, 25') directed in parallel with the longitudinal direction of the tape cassette (11, 11') is provided on a bottom face of each of said tape cassettes (11, 11'), with a cassette positioning recess (26, 26') being formed on said third cassette guide groove (25, 25').

11. A tape cassette loading system as claimed in claim 10, wherein said cassette positioning recess (26, 26') is formed at a central portion in a longitudinal direction of said third cassette guide groove (25, 25').

12. A tape cassette loading system as claimed in claim 11, wherein said cassette positioning recess (26, 26') has a circular cross section.

13. A tape cassette loading system as claimed in claim 9 or 10, wherein said cassette positioning recess (26, 26') is adapted to be commonly used as a screw setting portion for clamping the tape cassette (11, 11').

## Patentansprüche

1. Bandkassetten-Ladesystem mit einem Satz Bandkassetten, der von einer kleinformatigen bis zu einer großformatigen Kassette reicht, welche Kassetten mit ihrer langen Seite in eine Kassettenhalterung (30') eingeführt werden, mit
(a) einer kleinen Bandkassette (11), die ein kleines Kassettengehäuse generell quaderförmiger Form mit einer Länge H und einer Tiefe J (J < H) aufweist sowie ein Paar Spulen in dem kleinen Kassettengehäuse, an welchem kleinen Kassettengehäuse eine erste Kassettenführungsnut (23) senkrecht zur Längsausdehnung und in einem mittleren Abschnitt der Längsausdehnung einer Bodenfläche des kleinen Kassettengehäuses zur Führung der Kassette in die Kassettenhalterung ausgebildet ist;
(b) einer großen Bandkassette (11'), die ein großes Kassettengehäuse generell quaderförmiger Form mit einer Länge S, die größer ist als die Länge H, und einer Tiefe T, die größer ist als die Tiefe J der kleinen Bandkassette (11), aufweist sowie ein Paar Spulen in dem großen Kassettengehäuse, an welchem großen Kassettengehäuse eine erste Kassettenführungsnut (23') senkrecht zur Längsausdehnung und in einem mittleren Abschnitt der Längsausdehnung einer Bodenfläche des großen Kassettengehäuses zur Führung der Kassette in die Kassettenhalterung ausgebildet ist;
(c) welche Kassettenhalterung (30') einen, eine fehlerhafte Kassetteneinführung verhindernden Vorsprung (31') enthält, der in einem mittleren Abschnitt und entsprechend den ersten Kassettenführungsnuten (23, 23') ausgebildet ist;
dadurch gekennzeichnet, daß
(d) die kleine Bandkassette (11) weiterhin zweite Kassettenführungsnuten (24, 24a) aufweist, die senkrecht zur Längsausdehnung und an entgegengesetzten Seiten verlaufen, wobei die erste Kassettenführungsnut (23) sich zwischen ihnen befindet;
(e) die große Bandkassette weiterhin zweite Kassettenführungsnuten (24', 24a') aufweist, die senkrecht zur Längsausdehnung und an entgegengesetzten Seiten verlaufen, wobei die erste Kassettenführungsnut (23') sich zwischen ihnen befindet;
(f) daß die ersten und zweiten Kassettenführungsnuten (23', 24', 24a') der großen Bandkassette (11') sich an ähnlichen Positionen befinden wie die ersten und zweiten Kassettenführungsnuten (23, 24, 24a) der kleinen Bandkassette (11), wenn die große und die kleine Bandkassette (11', 11) im mittleren Abschnitt der Längsausdehnung ausgerichtet sind, sowie an ähnlichen Positionen ihrer Vorderflächen;
(g) daß die Kassettenhalterung (30') mit einem Satz von Kassettenführungsvorsprüngen (32') versehen ist, die den zweiten Kassettenführungsnuten (24, 24a; 24', 24a') an kleiner und großer Bandkassette entsprechen;
(h) so daß, wenn ein Abstand zwischen einander gegenüberliegenden Flächen des ein fehlerhaftes Einführen von Kassetten verhindernden Vorsprungs (31') und jeder der genannten Kassettenführungsvorsprünge (32') durch 1' dargestellt wird, und ein Abstand zwischen einander gegenüberliegenden Flächen jeder der genannten Kassettenführungsvorsprünge (32') und einer Seitenwand der Kassettenhalterung (30') durch K' dargestellt wird, die Kassettenführungsvorsprünge (32') örtlich so angeordnet sind, daß ein Verhältnis von 1' < J und K' < J vorhanden ist.

2. Bandkassetten-Ladesystem nach Anspruch 1, bei dem jede der Bandkassetten (11, 11') an ihrer unteren Fläche Kassettenpositionierungsöffnungen (22, 22') aufweist, wodurch die Mehrzahl von ersten und zweiten Kassettenführungsnuten (23, 23', 24, 24', 24a, 24a') gegenüber den Kassettenpositionierungsöffnungen (22, 22') in ihrer örtlichen Ausrichtung zur Übereinstimmung gebracht werden.

3. Bandkassetten-Ladesystem nach Anspruch 2, bei dem eine Mehrzahl von genannten ersten und zweiten Kassettenführungsnuten (23, 23', 24, 24', 24a, 24a') in generell parallel zueinander verlaufender Beziehung angeordnet sind.

4. Bandkassetten-Ladesystem nach Anspruch 3, bei dem jede der genannten Bandkassetten (11, 11') einen Öffnungsabschnitt (13, 13') zur Aufnahme von Gliedern eines dazupassenden Gerätes in ihrem mittleren Vorderflächenabschnitt aufweist, welche zweiten Kassettenführungsnuten (24, 24a, 24', 24a') der Bandkassette an jeweils einander gegenüberliegenden Seiten des Öffnungsabschnittes (13, 13') angeordnet sind.

5. Bandkassetten-Ladesystem nach Anspruch 4, bei dem die Tiefenabmessung der zweiten Kassettenführungsnuten (24, 24a, 24', 24a') an einander gegenüberliegenden Seiten der Vorderfläche jeder Bandkassette (11, 11') länger ist als die Tiefenabmessung des Öffnungsabschnittes (13, 13') der Bandkassette.

6. Bandkassetten-Ladesystem nach Anspruch 2 oder 5, bei dem die erste, im mittleren Abschnitt der Längsausdehnung jeder Bandkassette (11, 11') angeordnete Kassettenführungsnut (23, 23') sich in Richtung auf die rückwärtige Seite der Bandkassette über die zweiten, an einander gegenüberliegenden Vorderflächenseiten der Bandkassette (11,11') angeordneten Kassettenführungsnuten (24, 24a, 24', 24a') hinaus erstreckt.

7. Bandkassetten-Ladesystem nach Anspruch 2, bei dem die ersten und zweiten Kassettenführungsnuten (23, 23', 24, 24', 24a, 24a') am Öffnungsabschnitt der Bandkassette mit geneigten Flächen ausgebildet sind.

8. Bandkassetten-Ladesystem nach Anspruch 7, bei dem, wenn bei dem Satz zweiter Kassettenführungsnuten (24, 24', 24a, 24a') jeder Bandkassette (11, 11') eine Breite einer der zweiten Kassettenführungsnuten (24a, 24a') an der Seite des Öffnungsabschnittes als eine erste Breite (N) festgesetzt ist, und eine weitere Breite an einer inneren Tiefe der genannten zweiten Kassettenführungsnuten (24a, 24a') als eine zweite Breite (O) festgesetzt ist, die erste Breite (N) größer als die zweite Breite (O) ausgebildet ist.

9. Bandkassetten-Ladesystem nach Anspruch 1, bei dem jede der Bandkassetten (11, 11') an ihrer Bodenfläche eine Kassettenpositionierungsvertiefung (26, 26') zur Positionierung der Bandkassette (11, 11') an der Kassettenhalterung beim Laden enthält, wobei die Kassettenpositionierungsvertiefung (26, 26') bei jeder der genannten Bandkassetten (11, 11') den gleichen Abstand von der rückwärtigen Kassettenfläche aufweist.

10. Bandkassetten-Ladesystem nach Anspruch 9, bei dem eine dritte Kassettenführungsnut (25, 25') sich parallel zur Längsausdehnung der Bandkassette (11, 11') an einer Bodenfläche der genannten Bandkassetten (11, 11') erstreckt und eine Kassettenpositionierungsvertiefung (26, 26') an der dritten Kassettenführungsnut (25, 25') ausgebildet ist.

11. Bandkassetten-Ladesystem nach Anspruch 10, bei dem die Kassettenpositionierungsvertiefung (26, 26') an einem mittleren Abschnitt der Längsausdehnung der dritten Kassettenführungsnut (25, 25') ausgebildet ist.

12. Bandkassetten-Ladesystem nach Anspruch 11, bei dem die Kassettenpositionierungsvertiefung (26, 26') einen runden Querschnitt aufweist.

13. Bandkassetten-Ladesystem nach Anspruch 9 oder 10, bei dem die Kassettenpositionierungsvertiefung (26,26') gleichzeitig zum Verschrauben der Bandkassette (11, 11') ausgelegt ist.

## Revendications

1. Système de chargement de cassette à bande avec un ensemble de cassettes à bande passant d'une cassette de petite taille à une cassette de grande taille, ces cassettes devant être insérées dans un support de cassette (30') par leur côté long, le système comprenant
(a) une petite cassette à bande (11) comprenant un boîtier de petite cassette d'une forme généralement parallélépipédique avec une longueur longitudinale H et une profondeur J (J < H), et une paire de bobines prévue à l'intérieur dudit boîtier de petite cassette, ledit boîtier de petite cassette étant muni d'une première rainure de guidage de cassette (23) normale à la direction longitudinale et au niveau d'une partie centrale dans une direction longitudinale d'une face de fond dudit boîtier de petite cassette afin de la guider dans le support de cassette,
(b) une grande cassette à bande (11'), comprenant un boîtier de grande cassette également de forme généralement parallélépipédique avec une longueur longitudinale S plus grande que ladite longueur longitudinale H et une profondeur T plus grande que ladite profondeur J de ladite petite cassette à bande (11), et une paire de bobines prévue à l'intérieur dudit boîtier de grande cassette, ledit boîtier de grande cassette étant muni d'une première rainure de guidage de cassette (23') normale à la direction longitudinale et au niveau d'une partie centrale dans une direction longitudinale d'une face de fond dudit boîtier de grande cassette afin de la guider dans le support de cassette,
(c) ledit support de cassette (30') étant muni d'une saillie d'interdiction d'insertion erronée de cassette (31') formée au niveau d'une partie centrale et correspondant aux premières rainures de guidage de cassette (23, 23'),
caractérisé en ce que
(d) la petite cassette à bande (11) comprend en outre des secondes rainures de guidage de cassette (24, 24a) normales à la direction longitudinale qui sont prévues en plus au niveau des côtés opposés, ladite première rainure de guidage de cassette (23) étant positionnée entre celles-ci,
(e) la grande cassette comprenant en outre des secondes rainures de guidage de cassette (24', 24a') normales à la direction longitudinale, prévues en plus au niveau des côtés opposés, ladite première rainure de guidage de cassette (23') étant positionnée entre celles-ci,
(f) lesdites première et secondes rainures de guidage de cassette (23', 24', 24a') de la grande cassette à bande (11') étant disposées à des positions similaires aux positions desdites première et secondes rainures de guidage de cassette (23 ; 24, 24a) de ladite petite cassette à bande (11), lorsque lesdites grande et petite cassettes à bande (11, 11') sont alignées au niveau de la partie centrale dans la direction longitudinale, et également au niveau des faces avant de celles-ci,
(g) le support de cassette (30') étant muni d'un ensemble de saillies de guidage de cassette (32') correspondant aux secondes rainures de guidage de cassette (24, 24a ; 24', 24a') sur les petite et grande cassettes à bande,
(h) d'où il résulte que lorsqu'une distance entre les faces opposées de ladite saillie d'interdiction d'insertion erronée de cassette (31') et chacune desdites saillies de guidage de cassette (32') est représentée par I', et qu'une distance entre les faces opposées de chacune desdites saillies de guidage de cassette (32') et une paroi latérale dudit support de cassette (30') est représentée par K', lesdites saillies de guidage de cassette (32') sont disposées dans des positions telles qu'elles vérifient les relations I' < J et K' < J.

2. Système de chargement de cassette à bande selon la revendication 1, dans lequel chacune desdites cassettes à bande (11, 11') est munie, sur sa face de fond, de trous de positionnement de cassette (22, 22') d'où il résulte que la pluralité des premières et secondes rainures de guidage de cassette (23, 23', 24, 24', 24a, 24a') sont rendues communes les unes avec les autres en relation de position avec celles-ci en prenant lesdits trous de positionnement de cassettes (22, 22') comme référence.

3. Système de chargement de cassette à bande selon la revendication 2, dans lequel la pluralité desdites premières et secondes rainures de guidage de cassette (23, 23', 24, 24', 24a, 24a') sont positionnées en une relation généralement parallèle les unes avec les autres.

4. Système de chargement de cassette à bande selon la revendication 3, dans lequel chacune desdites cassettes à bande (11, 11') comporte une partie d'ouverture (13, 13') destinée à recevoir des éléments d'un appareil associé au niveau de sa partie de face avant centrale, lesdites secondes rainures de guidage de cassette (24, 24a, 24', 24a') de la cassette à bande étant prévues respectivement au niveau des côtés opposés de ladite partie d'ouverture (13, 13').

5. Système de chargement de cassette à bande selon la revendication 4, dans lequel la profondeur desdites secondes rainures de guidage de cassette (24, 24a, 24', 24a') au niveau des côtés de face opposés de chaque cassette à bande (11, 11') est plus longue que la profondeur au niveau de la partie d'ouverture (13, 13') de la cassette à bande.

6. Système de chargement de cassette à bande selon la revendication 2 ou 5, dans lequel la première rainure de guidage de cassette (23, 23') positionnée au niveau de la partie centrale dans la direction longitudinale de chaque cassette à bande (11, 11') est prolongée en direction du côté de la face arrière de la cassette à bande au-delà des secondes rainures de guidage de cassette (24, 24a, 24', 24a') prévues au niveau des côtés de face opposés de ladite cassette à bande (11, 11').

7. Système de chargement de cassette à bande selon la revendication 2, dans lequel lesdites premières et secondes rainures de guidage de cassette (23, 23', 24, 24', 24a, 24a') sont munies, au niveau des parties d'ouverture de celles-ci, de faces inclinées.

8. Système de chargement de cassette à bande selon la revendication 7 dans lequel, lorsque dans l'ensemble de secondes rainures de guidage de cassette (24, 24', 24a, 24a') de chaque cassette à bande (11, 11'), une largeur au niveau du côté de partie d'ouverture de l'une desdites secondes rainures de guidage de cassette (24a, 24a') est établie pour être d'une première largeur (N), et qu'une autre largeur au niveau d'un côté de profondeur intérieur desdites secondes rainures de guidage de cassette (24a, 24a') est établie pour être d'une seconde largeur (O), la première largeur (N) est agencée pour être plus grande que la seconde largeur (O).

9. Système de chargement de cassette à bande selon la revendication 1, dans lequel chacune desdites cassettes à bande (11, 11') est munie, sur sa face de fond, d'un évidement de positionnement de cassette (26, 26') destiné au positionnement lors du chargement de la cassette à bande (11, 11') sur le support de cassette, ledit évidement de positionnement de cassette (26, 26') étant prévu à la même distance par rapport à la face arrière de chacune desdites cassettes à bande (11, 11').

10. Système de chargement de cassette à bande selon la revendication 9, dans lequel une troisième rainure de guidage de cassette (25, 25') orientée parallèlement à la direction longitudinale de la cassette à bande (11, 11') est prévue sur une face de fond de chacune desdites cassettes à bande (11, 11'), un évidement de positionnement de cassette (26, 26') étant formé sur ladite troisième rainure de guidage de cassette (25, 25').

11. Système de chargement de cassette à bande selon la revendication 10, dans lequel ledit évidement de positionnement de cassette (26, 26') est formé au niveau d'une partie centrale d'une direction longitudinale de ladite troisième rainure de guidage de cassette (25, 25').

12. Système de chargement de cassette à bande selon la revendication 11, dans lequel ledit évidement de positionnement de cassette (26, 26') présente une section transversale circulaire.

13. Système de chargement de cassette à bande selon la revendication 9 ou 10, dans lequel ledit évidement de positionnement de cassette (26, 26') est adapté pour être utilisé en commun comme partie d'une réglage à vis destiné à serrer la cassette à bande (11, 11').
